# EUROPÄISCHE PATENTSCHRIFT

(11) **EP 0 854 892 B1**
(45) Veröffentlichungstag und Bekanntmachung des Hinweises auf die Patenterteilung: **03.07.2002**
(21) Anmeldenummer: 96934647.7
(22) Anmeldetag: 11.10.1996
(51) Int. Cl.: C08J 7/06, C09D 1/00

(54) **AEROGELBESCHICHTETE FOLIE**
AEROGEL-COATED SHEET
FEUILLE REVETUE D'AEROGEL

(30) Priorität: 11.10.1995 DE 19537821; 20.02.1996 DE 19606114
(43) Veröffentlichungstag der Anmeldung: 29.07.1998
(73) Patentinhaber: CABOT CORPORATION, Boston, Massachusetts 02210-2019 (US)
(72) Erfinder: FRANK, Dierk, D-65719 Hofheim (DE); SCHWERTFEGER, Fritz, D-60529 Frankfurt am Main (DE); ZIMMERMANN, Andreas, D-64347 Griesheim (DE)
(74) Vertreter: Luderschmidt, Schüler & Partner GbR
(86) Internationale Anmeldenummer: EP9604434
(87) Internationale Veröffentlichungsnummer: WO9713803

(56) Entgegenhaltungen:
- EP-A- 0 667 370
- DE-A- 4 106 727
- DE-B- 1 023 881
- PATENT ABSTRACTS OF JAPAN vol. 017, no. 490 (M-1474), 6.September 1993 & JP,A,05 118492 (MATSUSHITA ELECTRIC WORKS LTD)
- DATABASE WPI Week 9637 Derwent Publications Ltd., London, GB; AN 96-367002 XP002024146 & JP,A,08 174 740 (MATSUSHITA ELECTRIC WORKS TLD)

## Beschreibung

Die Erfindung betrifft Wärmedämmstoffe auf Basis von Aerogelen, ein Verfahren zu ihrer Herstellung und ihre Verwendung

Aerogele sind hochporöse Materialien mit niedriger Dichte, die durch Bildung eines Gels und anschließender Entfernung der Flüssigkeit unter weitgehender Erhaltung der Gelstruktur hergestellt werden.

Nach einer enger gefaßten Definition (siehe z.B. Gesser und Goswanni, Chem. Rev. 1989, 89, 767) versteht man unter Aerogelen Materialien, bei denen die Flüssigkeit aus dem Gel unter überkritischen Bedingungen entfernt wird, während man bei Geltrocknung unter unterkritischen Bedingungen von Xerogelen und im Falle der Entfernung der Flüssigkeit aus dem gefrorenen Zustand durch Sublimation von Kryogelen spricht.

Aerogele im Sinne der Erfindung umfassen all diese Materialien und können außer Luft auch beliebige andere Gase enthalten. Die Gase können auch unter Vakuum aus dem Aerogel entfernt werden.

Insbesondere Aerogele mit Porositäten von über 60 % und Dichten unter 0,6 g/cm³ weisen eine sehr geringe Wärmeleitfähigkeit auf und eignen sich daher als Wärmedämmstoffe. Aufgrund ihrer geringen Dichte sind solche Materialien jedoch mechanisch wenig stabil.

Zur Überwindung dieses Nachteils sind beispielsweise in der EP-A 0 340 707 und DE-A 44 37 424 aerogelhaltige Zusammensetzungen beschrieben, die zusätzlich ein Bindemittel enthalten. Um zu mechanisch anspruchsvollen Aerogelen zu gelangen, die zudem transparent sind, kann das Aerogel durch Einbau von Fasern verstärkt werden (siehe z.B. DE-A 44 30 642). All diese Verfahren haben jedoch den Nachteil, daß durch den Einbau von Fremdstoffen die Wärmeleitfähigkeit des Aerogelmaterials selbst erhöht wird.

Brinker et al. (Nature 1995, 374, 439) beschreiben ein Verfahren zur Herstellung dünner Aerogelfilme auf starren Substraten, wobei als eine mögliche Anwendung die wärmeisolierende Verkleidung von Gebäuden gesehen wird.

Es wurde nun überraschend gefunden, daß sich Aerogele auch als dünne Schicht auf flexiblen Folien aufbringen lassen, womit sich Aerogelmaterialien mit einer guten mechanischen Stabilität herstellen lassen.

In der DE-A 38 44 003 sind mit Kieselgel beschichtete Folien beschrieben, die zudem photochrome Verbindungen enthalten. Zu ihrer Herstellung wird in einem Flottenbehälter eine Waschflüssigkeit, die neben den photochromen Substanzen bis zu 5 % Polyvinylalkohol enthält, vorgelegt. Durch die Flotte wird eine transparente Folie, beispielsweise eine Polyacrylatfolie, hindurchgeführt und auf den hierbei gebildeten Flüssigkeitsfilm Wasserglas- und Schwefelsäurelösung aufgesprüht, wobei sich Kieselgel abscheidet. Die so beschichtete Folie wird einer Trocknung bei ca. 80°C und einem Druck von 0,1 bis 0,5 bar unterzogen. Bei diesem Herstellungsverfahren entsteht jedoch kein Produkt mit Gelstruktur, es handelt sich also nicht um eine aerogelbeschichtete Folie.

In der DE-A-10 23 888 wird ein Verfahren zur Herstellung von nicht klebenden Folien aus Cellulosehydrat offenbart. Die niedrige Klebrigkeit wird durch die Beschichtung mit einem Weichmacher erreicht, wobei dieser Weichmacher Oxidaerogele enthält. Es handelt sich somit um eine aerogelhaltige Weichmacherschicht.

In der DE-A41 06 727 wird ein teilweise oder vollständig umhüllter Wärmedämmformkörper offenbart; als Wämedämmformkörper können regelmäßige oder unregelmäßige Formen zur Verwendung kommen. Es handelt sich dabei um Formkörper auf der Basis von verpreßtem feinporigen Kieselsäureaerogel.

Weder die Aerogele der DE-A-10 23 888 noch der DE-A-41 06 727 sind hydrophob.

Gegenstand der Erfindung ist daher eine Folie, die sich dadurch auszeichnet, daß sie auf mindestens einer Seite mit einer Aerogelschicht beschichtet ist und daß die Aerogele hydrophobe Oberflächengruppen aufweisen.

In einer speziellen Ausführungsform der erfindungsgemäßen Folie ist das, vorzugsweise als Pulver oder Granulat vorliegende, Aerogel in die Folie eingeschlossen. Das Aerogel kann dabei evakuiert sein, muß es aber nicht.

Die erfindungsgemäß beschichtete Folie weist neben einer geringen Wärmeleitfähigkeit eine gute mechanische Stabilität auf.

Sie ermöglicht in einfacher Weise eine hohe Lichttransmission und eignet sich damit auch zur transluzenten und opaken Wärmedämmung.

Durch eine niedrige Dielektrizitätskonstante, verbunden mit einem geringen Verlustfaktor, eignet sie sich auch für elektronische Anwendungen.

Als Folien eignen sich alle gängigen Folienmaterialien, wie Polyester, beispielsweise Polyethylenterephthalat (PET), Cellulose und ihre Derivate, beispielsweise Cellophan®, Polyolefine, beispielsweise Polyethylen, Polypropylen, Polystyrol, Polymethyl(meth)acrylate, Polyvinylchlorid, Polyamide und Polycarbonate, wobei Molgewichte und Orientierungen im allgemeinen unkritisch sind. Die Folien können außerdem Fasern (z.B. Glasfasern) enthalten. Ebenso geeignet sind Metallfolien, beispielsweise aus Aluminium, wobei in diesem Fall opake Anwendungen verfolgt werden.

Bevorzugte Folienmaterialien sind Polypropylen und Polyethylenterephthalat, wobei biaxial orientierte Folien besonders bevorzugt sind. Vorteilhaft sind auch solche Folien, die eine möglichst geringe Entflammbarkeit auszeichnet.

Die Folie kann auch bedruckt oder gefärbt sein.

Zur besseren Haftung der Aerogelschicht werden die Filme vorzugsweise nach gängigen, dem Fachmann bekannten Verfahren vorbehandelt.

Bevorzugt ist eine chemische Vorbehandlung, beispielsweise mit Aminosiloxanen oder Iminen, oder eine Vorbehandlung durch Coronarentladungs-Verfahren.

Hierzu eignen sich grundsätzlich alle gängigen Beschichtungstechniken, wie z.B. Dipcoating, Spincoating und Rollercoating.

Die so vorbereiteten Folien haben im allgemeinen eine Dicke von 5 bis 1000 µm.

Im Falle von transparenten Folien kann mindestens eine der Folien zur Erzielung besonderer optischer Effekte texturiert bzw. strukturiert sein. In einer bevorzugten Ausführungsform weist die Folie eine derartige Stukturierung auf, daß die Transmission von gerichtetem Licht je nach Einfallswinkel variiert. Dieser Effekt kann z.B. durch Verwendung einer Folie erzielt werden, die zu einem geeigneten Profil geformt wurde (z.B. sägezahnartiges Profil), wobei durch dieses Profil Lamellen entstehen. Vorzugsweise sind die Lamellen dabei so angeordnet, daß ihre Kanten möglichst senkrecht zur Einfallrichtung des Lichts verlaufen. Je nach Winkel zwischen Lichtquelle und Folie tritt an den geneigten Flächen eine mehr oder weniger starke Reflexion und damit weniger oder mehr Transmission auf. Dadurch kann z.B. bei der Verwendung im Bereich der transparenten Wärmedämmung eine hohe Transmission bei niedrigem Stand der Sonne und eine niedrigere Transmission bei hohem Stand der Sonne erzielt werden. Die Strukturierung der Folie kann, z.B. zur Vermeidung von Verschmutzung durch Staubablagerungen auf der dem Aerogel abgewandten Seite durch eine weitere ebene Folie abgedeckt sein.

Die erfindungsgemäße, beschichtete Folie enthält vorzugsweise Aerogele mit Porositäten über 60 %, besonders bevorzugt über 70 %, und insbesondere über 80 %. Die Dichte des Aerogels liegt im allgemeinen unter 0,6 g/cm³, bevorzugt unter 0,4 g/cm³. Die Porosität ist dabei als prozentualer Anteil des Porenvolumens am Gesamtvolumen des Aerogels definiert.

Die Wärmeleitfähigkeit des Aerogels sollte vorzugsweise weniger als 40 mW/mK und besonders bevorzugt weniger als 25 mW/mK betragen.

Die erfindungsgemäß verwendeten Aerogele werden im allgemeinen erhalten, in dem
a) ein Sol hergestellt wird,
b) dem Sol gegebenenfalls Fasern zugesetzt werden,
c) das in b) erhaltene Sol in ein Gel überführt wird,
d) die in dem Gel enthaltene Flüssigkeit ausgetauscht wird, und
e) das in d) erhaltene Gel so getrocknet wird, daß ein Aerogel entsteht.

Als Ausgangsmaterial für Schritt a) dienen für die Sol-Gel-Technik geeignete Metalloxidverbindungen, insbesondere Si- und Al-Verbindungen (C.J. Brinker, G.W. Scherer, Sol-Gel-Science, 1990, Kap.2 und 3) wie Si- oder Al-Alkoxide, Wasserglas, organische Polykondensate auf Basis von Melaminformaldehydharzen (US-A-5,086,085) oder Resorcinformaldehydharzen (US-A-4,873,218) oder Mischungen derselben. Weiterhin kann das Sol aus partikulärem oder kolloidalem Si- oder Al-Oxid bestehen. Bevorzugt eingesetzt werden Si-Verbindungen, insbesondere Wasserglas.

Die Solpartikel tragen auf der Oberfläche funktionelle Gruppen, die zur Kondensation fähig sind. Diese Gruppen werden im folgenden Oberflächengruppen genannt. Typischerweise tragen Solpartikel aus Si- oder Al-Verbindungen hydrophile Hydroxylgruppen (OH). Herstellungsbedingt können auch noch Reste von Alkoxygruppen (OR) vorliegen, wenn Alkoxide als Ausgangsmaterialien eingesetzt werden (C.J. Brinker, G.W. Scherer, Sol-Gel-Science, 1990, Kap. 10).

Setzt man dem Sol vor der Gelherstellung ein IR-Trübungsmittel, z.B. Ruß, Titandioxid, Eisenoxide oder Zirkondioxid zu, so kann der Strahlungsbeitrag zur Wärmeleitfähigkeit reduziert werden.

Zur Erzielung einer Färbung können gegebenenfalls Farbstoffe und/oder Farbpigmente zugesetzt werden.

Im Schritt b) wird gegebenenfalls ein Fasermaterial zugesetzt.

Als Fasermaterial können anorganische Fasern, wie Glasfasern oder Mineralfasern, organische Fasern, wie Polyesterfasern, Aramidfasern, Nylonfasern oder Fasern pflanzlichen Ursprungs, sowie Gemische derselben verwendet werden. Die Fasern können auch beschichtet sein, z.B. Polyesterfasern, die mit einem Metall wie z.B. Aluminium metallisiert sind.

Bevorzugt sind Glasfasern sowie Fasern aus dem Material, das als Rohstoff für die unbeschichtete Folie dient.

Die Beschichtung kann auch einer besseren Anbindung des Aerogels an die Fasern dienen, in Analogie zu sog. "coupling agents" auf Glasfasern in glasfaserverstärkten Kunststoffen.

Durch den Zusatz des Fasermaterials kann auch ein optisch ansprechendes Erscheinungsbild der beschichteten Folie erreicht werden.

Um eine Erhöhung der Wärmeleitfähigkeit durch die zugegebenen Fasern zu vermeiden, sollte
a) der Volumenanteil der Fasern 0,1 bis 30 %, vorzugsweise 0,1 bis 10 % betragen und
b) die Wärmeleitfähigkeit des Fasermaterials so gering wie möglich, vorzugsweise < 1 W/mK,
sein.

Bei der Verwendung hoher Volumenanteile von Fasern mit hoher Dichte, wie z.B. Glasfasern, können auch Dichten bis zu 0,9 g/cm³ auftreten.

Durch geeignete Wahl von Faserdurchmesser und/oder -material kann der Strahlungsbeitrag zur Wärmeleitfähigkeit reduziert und eine größere mechanische Festigkeit erzielt werden. Dazu soll der Faserdurchmesser bei
a) nichtmetallisierten Fasern vorzugsweise 0,1 bis 30 µm und/oder bei
b) metallisierten Fasern vorzugsweise 0,1 bis 20 µm betragen.

Der Strahlungsbeitrag zur Wärmeleitfähigkeit kann weiter dadurch reduziert werden, daß IR-getrübte Fasern, z.B. mit Ruß geschwärzte PET-Fasern, verwendet werden.

Die mechanische Festigkeit der Aerogelschicht wird weiter durch Länge und Verteilung der Fasern im Aerogel beeinflußt.
Die Fasern können z.B. als einzelne Fasern ungeordnet oder ausgerichtet eingebracht werden. In diesem Fall sollten sie, um eine hinreichende Festigkeit des Verbundstoffs zu gewährleisten, vorzugsweise mindestens 1 cm lang sein.

Zur besseren Dispergierbarkeit der Fasern bzw. Benetzung des Vlieses können die Fasern mit einer geeigneten Schlichte beschichtet sein. Die Beschichtung kann auch einer besseren Anbindung des Gels an die Fasern dienen.

Die Überführung des Sols in ein Gel (Schritt c) kann zum Beispiel durch Hydrolyse und Kondensation von Si- oder Al-Alkoxiden, Gelieren von partikulärem oder kolloidalem Si- oder Al-Oxid oder einer Kombination dieser Methoden erfolgen. Die Herstellung von Si-haltigen Gelen wird beispielsweise in der WO 93/06044 beschrieben. Die Herstellung der organischen Gele wird z.B. in der US-A-5,086,085 und der US-A-4,873,218 beschrieben.

Falls in Schritt a) ein wäßriges Sol verwendet wurde und der pH-Wert mit einer Mineralsäure verändert wurde, sollte das Gel mit Wasser elektrolytfrei gewaschen werden.

Eine Zugabe von Fasern kann, insbesondere im Fall von Einzelfasern auch während der Gelbildung erfolgen, wenn das Sol schon eine hohe Viskosität erreicht hat, aber noch nicht fest ist.

Es ist vorteilhaft, das in Schritt c) oder d) erhaltene Gel altern zu lassen, um die Gelfestigkeit zu erhöhen. Die Alterung des Gels findet im allgemeinen bei einer Temperatur von 20°C bis zum Siedepunkt der in dem Gel enthaltenen Flüssigkeit statt. Handelt es sich bei der Gelflüssigkeit beispielsweise um Wasser und bei der Gelmatrix um SiO₂, so findet der Alterungsprozeß im allgemeinen bei 20 bis 90°C, vorzugsweise 20 bis 70°C, bei einem pH-Wert von 6 bis 11, vorzugsweise 6 bis 9, innerhalb von 1 Minute bis 48 Stunden, insbesondere 5 Minuten bis 24 Stunden statt.

Die in dem Gel enthaltene Flüssigkeit wird in mindestens einem Waschprozeß (Schritt d) durch die gleiche oder eine andere Flüssigkeit ausgetauscht, die für die nachfolgende Trocknung in Schritt e) geeignet ist.

Die Schritte a) bis d) werden im allgemeinen bei einer Temperatur zwischen dem Gefrierpunkt der im Gel enthaltenen Flüssigkeit und 70°C, jedoch maximal der Siedetemperatur der im Gel enthaltenen Flüssigkeit durchgeführt.

Vorteilhaft kann das in Schritt d) erhaltene Gel unterkritisch zu einem Aerogelverbundstoff getrocknet werden. Das Trocknungsverfahren ist dadurch gekennzeichnet, daß
e1) das im Schritt d) erhaltene Gel mit einer oder mehreren oberflächenmodifizierenden Substanzen so umgesetzt wird, daß ein so großer Anteil der Oberflächengruppen des Gels durch Gruppen der oberflächenmodifizierenden Substanz ersetzt wird, daß eine weitere Kondensation zwischen den Oberflächengruppen auf verschiedenen Porenoberflächen weitgehend unterdrückt wird und/oder durch Änderung des Kontaktwinkels zwischen Porenoberfläche und Flüssigkeit aus der getrocknet wird, die Kapillarkräfte reduziert werden,
e2) gegebenenfalls die in dem Gel enthaltene Flüssigkeit ausgetauscht wird und
e3) das resultierende Gel bei einer Temperatur unter der kritischen Temperatur der in dem Gel enthaltenen Flüssigkeit und einem Druck von 0,001 bar bis zu dem Dampfdruck dieser Flüssigkeit bei dieser Temperatur getrocknet wird.

Im Schritt d) muß zum Waschen eine für die folgenden Prozeßschritte geeignete Flüssigkeit verwendet werden. Enthält das Gel beispielsweise Wasser, empfiehlt es sich, das Gel mit einem protischen oder aprotischen organischen Lösungsmittel zu waschen bis der Wassergehalt des Gels ≤ 5 Gew.-%, bevorzugt ≤ 2 Gew.-% ist.

Als organische Lösungsmittel werden dabei im allgemeinen Ether, Ester oder Ketone sowie aliphatische oder aromatische Kohlenwasserstoffe verwendet. Bevorzugte Lösungsmittel sind Methanol, Ethanol, Aceton, Tetrahydrofuran, Essigsäureethylester, Dioxan, n-Hexan, n-Heptan und Toluol. Man kann auch Gemische aus den genannten Lösungsmitteln verwenden. Das Lösungsmittel muß hinsichtlich der im folgenden Schritt eingesetzten oberflächenmodifizierenden Substanz weitgehend inert sein.

Durch die in Schritt e1) verwendeten oberflächenmodifizierenden Substanzen wird ein großer Anteil der hydrophilen oder reaktiven Oberflächengruppen auf den Porenoberflächen zu hydrophoben oder zur weiteren Kondensation ungeeigneten Oberflächengruppen umgesetzt.

Als Folge wird eine weitere Kondensation zwischen Gruppen auf verschiedenen Porenoberflächen unterdrückt bzw. werden durch Änderung des Kontaktwinkels zwischen Porenwand und Flüssigkeitsmeniskus der Flüssigkeit aus der getrocknet wird, die Kapillarkräfte reduziert.

Im Fall, daß das Gel ein Silicium-, ein Aluminium- oder ein Siliciumaluminiumoxidgel ist, treten als ursprüngliche Oberflächengruppen im allgemeinen Gruppen der Formel MOH oder MOR auf, wobei M = Al oder Si und R = C₁-C₆-Alkyl, vorzugsweise Methyl oder Ethyl, ist. Durch Umsetzung mit oberflächenmodifizierenden Substanzen der allgemeinen Formel R'ₙMXₘ werden die ursprünglichen Oberflächengruppen durch inerte Gruppen des Typs MR'ₙ teilweise oder ganz ersetzt. Dabei sind n und m ganze Zahlen größer als Null, deren Summe der Wertigkeit von M entspricht. R' ist Wasserstoff oder ein nicht reaktiver organischer linearer, verzweigter, zyklischer, aromatischer oder heteroaromatischer Rest wie z.B. C₁-C₁₈-Alkyl, vorzugsweise C₁-C₆-Alkyl, besonders bevorzugt Methyl oder Ethyl, Cyclohexyl oder Phenyl; die R' sind unabhängig voneinander gleich oder verschieden oder können verbrückt sein. Weiter ist X ein Halogen, vorzugsweise Cl, oder ein Rest -OR", -SR" oder -NR"₂, wobei R" einen geradkettigen oder verzweigten, ein- oder mehrfach gleich oder verschieden substituierten aliphatischen Rest C₁ bis C₁₈ darstellt, in dem eine oder mehrere CH₂-Gruppen durch -C≡C-, -CH = CH-, -COO-, -O(C=O)-, -SiR"'₂-, -CO-, Phenylendiyl und/oder bis zu jede zweite CH₂-Einheit durch O oder NR"' ersetzt sein können, wobei R"' gleich Phenyl, C₁-C₁₈-Alkyl oder Benzyl ist, oder R" ein Benzylrest oder Phenylrest bedeutet, der durch 1 bis 5 Substituenten R', OH, OR', COOR', OCOR', SO₃H, SO₂Cl, F, Cl, Br, NO₂ oder CN substituiert sein kann; im Falle von N können die R" unabhängig voneinander gleich oder verschieden sein. Ist m mindestens zwei, so können die X unabhängig voneinander gleich oder verschieden oder verbrückt sein. Es können auch Mischungen der oberflächenmodifizierenden Substanzen eingesetzt werden.

Bevorzugt werden Silylierungsmittel der Formel R'₄₋ₙSiClₙ oder R'₄₋ₙSi(OR")ₙ mit n = 1 bis 3 eingesetzt, wobei R' und R" die vorstehende Bedeutung haben. Auch Silazane sind geeignet. Vorzugsweise verwendet man Methyltrichlorsilan, Dimethyldichlorsilan, Trimethylchlorsilan, Trimethylmethoxysilan oder Hexamethyldisilazan.

Vorzugsweise kann das silylierte Gel in Schritt e2) mit einem protischen oder aprotischen Lösungsmittel gewaschen werden, bis die unumgesetzte oberflächenmodifizierende Substanz im wesentlichen entfernt ist (Restgehalt ≤ 1 Gew.-%). Geeignete Lösungsmittel sind dabei die für Schritt d) genannten. Analog sind die dort als bevorzugt genannten Lösungsmittel auch hier bevorzugt.

In Schritt e3) wird in einer besonderen Ausführungsform das gegebenenfalls verstärkte, oberflächenmodifizierte Gel bei Temperaturen von -30 bis 200°C, vorzugsweise 0 bis 100°C, sowie einem Druck von 0,001 bis 20 bar, bevorzugt 0,01 bis 5 bar, besonders bevorzugt 0,1 bis 2 bar, getrocknet. Höhere Temperaturen als 200°C und/oder höhere Drücke als 20 bar sind ohne weiteres möglich, aber sie sind mit überflüssigem Aufwand verbunden und bringen keine Vorteile mit sich.
Die Trocknung wird im allgemeinen so lange fortgeführt, bis das Gel einen Lösungsmittel-Restgehalt von weniger als 0,1 Gew.-% aufweist.
Als Trocknungsverfahren geeignet sind zum Beispiel die Kontakt- und Konvektionstrocknung.

Darüber hinaus kann die Trocknung des Gels durch Verwendung von dielektrischen Trocknungsverfahren, z.B. durch Mikrowellentrocknung, wesentlich beschleunigt werden. Dazu wird nach der Oberflächenmodifikation das Lösungsmittel in Schritt e2), falls erforderlich, gegen ein Lösungsmittel ausgetauscht, das Mikrowellen gut absorbiert wie z.B. Wasser, Ethanol oder vorzugsweise Aceton. Die Gele lassen sich dann in einem Mikrowellentrockner schnell trocknen. Es ist ebenfalls möglich, die Trocknung unter Einstrahlung sichtbaren Lichts durchzuführen.

Besonders vorteilhaft für Lösungsmittelaustausch und Trocknung sind Gele mit einer Dicke zwischen 0,5 und 5 mm, da die Dauer für den Austausch von Lösungsmitteln bzw. die Trocknungszeit wesentlich durch Diffusion des Lösungsmittels bzw. des Lösungsmitteldampfes bestimmt wird.

Bevorzugt ist ein Verfahren zur Herstellung der erfindungsgemäßen Aerogelverbundstoffe, enthaltend ein SiO₂-Aerogel, das dadurch gekennzeichnet ist, daß
a) eine wäßrige Wasserglaslösung (SiO₂-Konzentration im allgemeinen ≤ 10 Gew.-%, vorzugsweise ≤ 7 Gew.-%) auf einen pH-Wert ≤ 3 eingestellt wird, beispielsweise mit Hilfe eines sauren lonenaustauscherharzes oder einer Mineralsäure, und zu der dabei entstandenen Kieselsäure eine Base, im allgemeinen NH₄OH, NaOH, KOH, Al(OH)₃ und/oder kolloidale Kieselsäure, gegeben wird,
b) gegebenenfalls Fasern zugegeben werden,
c) man die Kieselsäure polykondensieren läßt,
d) das Gel mit einem organischen Lösungsmittel gewaschen wird, bis der Wassergehalt des Gels ≤ 5 Gew.-% ist,
e1) das in Schritt d) erhaltene Gel mit einem Silylierungsmittel umgesetzt wird,
e2) gegebenenfalls das silylierte Gel mit einem organischen Lösungsmittel gewaschen wird bis der Restgehalt des unumgesetzten Silylierungsmittels ≤ 1 Gew.-% ist und
e3) das in Schritt e1) oder e2) erhaltene silylierte Gel bei -30 bis 200°C und 0,001 bis 20 bar getrocknet wird.

In Schritt a) wird bevorzugt ein saures lonenaustauscherharz eingesetzt.

Der so erhaltene Verbundstoff ist hydrophob, wenn die durch die Oberflächenmodifikation aufgebrachten Oberflächengruppen hydrophob sind, z.B. bei der Verwendung von Trimethylchlorsilan. Die Hydrophobizität kann nachträglich beispielsweise durch Austreiben bzw. partielle Pyrolyse reduziert werden.

Alternativ kann in Schritt e) das in Schritt d) erhaltene Gel z.B. durch Überführung der im Gel enthaltenen Flüssigkeit in einen überkritischen Zustand und anschließendes Entfernen der Flüssigkeit vom Feststoff durch Entspannungsverdampfung bei überkritischer Temperatur zu einem Aerogelverbundstoff getrocknet werden. Dazu muß in Schritt d) für den Austausch eine für die Trocknung geeignete Flüssigkeit, wie z.B. flüssiges CO₂ oder Methanol benutzt werden. Typische Prozesse zur überkritischen Trocknung aus CO₂ sind z.B. in der US-A-4,610,863 oder in Bommel M.J., de Haan, A.B., Journal of Materials Science, 29, (1994), S. 943-948, und aus Methanol in der EP-B-0396076 oder der WO 93/06044 beschrieben.

Um zum Schluß ein hydrophobes Aerogel zu erhalten, kann das Gel zwischen Schritt d) und e), gegebenenfalls nach dem Lösungsmitteltausch, mit einer oberflächenmodifizierenden Substanz umgesetzt werden, die zu einer Hydrophobisierung der Oberfläche führt. Gegebenenfalls muß nach diesem Schritt das Lösungsmittel noch einmal gegen die für die Trocknung geeignete Flüssigkeit ausgetauscht werden. Dazu geeignet sind z.B. die oben genannten Stoffe und Verfahren zur Oberflächenmodifikation. Vorteilhaft kann die Umsetzung aber auch nach der Trocknung durch eine Reaktion in der Gasphase erfolgen.

Vorzugsweise enthalten die erfindungsgemäß verwendeten Aerogele keine Bindemittel als Zusatzstoffe, um die Wärmeleitfähigkeit möglichst niedrig zu halten.

Die Herstellung der erfindungsgemäßen Folien erfolgt nach einer bevorzugten Variante so, daß ein geeignetes Sol, gegebenenfalls nach dem Schritt b), auf eine gegebenenfalls vorbehandelte Folie aufgebracht und durch Polykondensation zu einem Gel umgesetzt wird. Die Zugabe des Kondensationsmittels, beispielsweise einer Base, kann dabei kurz vor oder aber auch nach dem Aufbringen auf die Folie erfolgen.

Das Aufbringen kann nach unterschiedlichen, dem Fachmann geläufigen Dickund Dünnschichttechniken, wie Spritzen, Tauchen, Dipcoating, Spachteln und Verstreichen erfolgen.

Um beim Auftragen besonders homogene Schichten zu erhalten, kann das, gegebenenfalls verdünnte, Gel vor dem Beschichten einer Ultraschallbehandlung unterworfen werden.

Anschließend wird wie bei der Aerogel-Herstellung beschrieben weiterverfahren, wobei jedoch stets darauf geachtet werden muß, daß die eingestellten Temperaturen unter der Schmelz- oder Glastemperatur der unbeschichteten Folie liegen, damit diese nicht zersetzt wird.

Auf diese Weise hergestellte Folien zeigen eine sehr gute Haftung des Aerogels und kaum Risse.

Eine weitere Produktionsvariante für die erfindungsgemäße Folie ist die Herstellung eines, vorzugsweise glasfaserverstärkten, Aerogels mit anschließendem Aufkleben der Aerogel-Schicht auf die gegebenenfalls vorbehandelte Folie.

Eine weitere Herstellung der erfindungsgemäßen Folie erfolgt durch Aufbringen von Aerogelpulver oder Aerogelgranulat, wobei ein Granulat auch ein konfektioniertes Pulver sein kann, dem gegebenenfalls Haftvermittler z.B. in Form von Schmelzklebern zugesetzt werden auf eine gegebenenfalls vorbehandelte Folie. Anschließend wird eine zweite Folie gleichen oder unterschiedlichen Typs auf die Aerogelschicht gelegt und gegebenenfalls unter Zuhilfenahme von Vakuumtechnik und gegebenenfalls unter Erhitzen an die erste Folie angedrückt und teilweise mit ihr so verschmolzen und/oder verklebt, daß Bereiche des Aerogels eingeschlossen werden. Die Folien können durch eine spezielle Texturierung oder einen speziellen Formgebungsprozeß bereits Vertiefungen enthalten, die für einen Aerogeleinschluß förderlich sind.

Gegenstand der Erfindung ist auch eine Folie, erhältlich nach diesem Verfahren.

Diese Prozedur kann beliebig häufig wiederholt werden, um dickere Schichten oder Laminate aufzubauen.

Die erfindungsgemäßen Folien finden beispielsweise Anwendung als Wärmedämmaterialien.

Daneben können sie als Schallabsorptionsmaterialien direkt oder in der Form von Resonanzabsorbern verwendet werden, da sie eine geringe Schallgeschwindigkeit und, verglichen mit monolithischen Aerogelen oder Xerogelen, eine höhere Schalldämpfung sowie eine verbesserte Schallübertragung von Ultraschallsendern aufweisen.

Aufgrund ihrer niedrigen Dielektrizitätskonstanten und ihres geringen dielektrischen Verlustfaktors eignen sie sich auch für elektronische Anwendungen.

Weitere mögliche Anwendungen sind beispielsweise als Adsorptionsmaterialien oder, bei geeignetem porösem Folienmaterial, als Membrane.

### Beispiele

### Beispiel 1

Eine Hostaphan® PET Folie (Hoechst Diafoil Company, Grees, South Carolina) wird mit einem Sauerstoffplasma 3 Stunden bei 2.0 torr behandelt und anschließend zur weiteren Beschichtung mit einer Kieselsäurelösung auf eine waagerechte Unterlage, die an den Seiten eine Erhöhung von 1 cm aufweist, gelegt. Anschließend wird die Folie mit 1 mm einer 9 %-igen Wasserglaslösung, deren Kationen durch eine lonenaustauschersäule unmittelbar vorher abgetrennt wurden, überschichtet. Der pH-Wert der Lösung wurde zuvor durch geringe Zugabe von 0,1 n Natronlauge auf 4,7 eingestellt. Die Unterlage wird fest verschlossen und auf einer Heizplatte auf 80°C erwärmt. Innerhalb von wenigen (10) Minuten geliert die Lösung zu einem festen Gel, das noch für 3 Stunden bei 80°C gealtert wird. Anschließend wird die Unterlage mit der Folie und dem darauf haftenden Gel mit einer Rate von 2°C pro Minute abgekühlt und mit 9 ml Aceton überschichtet und für 20 Minuten stehen gelassen. Das unterstehende Aceton enthält Wasser aus der Gelschicht. Es wird abgegossen und mit neuem Aceton aufgefüllt. Der Prozeß wird sooft wiederholt, bis der Wassergehalt der abgegossenen wäßrigen Acetonlösung unter 1 % (Karl Fischer Titration) liegt. Danach wird die Folie mit einer Lösung aus 5 % Trimethylchlorsilan in Aceton überschichtet.
Die Unterlage wird erneut verschlossen und für 1 Stunde stehengelassen. Anschließend wird die überstehende Lösung abgegossen, 3 x mit frischem Aceton für je 20 Minuten nachgewaschen und die Folie mit dem darauf haftenden, oberflächenmodifizierten Gel unverschlossen zur Trocknung in einen Trockenschrank bei 50°C gestellt.

Nach 3 Stunden wird die getrocknete Folie herausgenommen und abgekühlt. Die Aerogelschicht weist leichte Risse auf, bleibt aber auch im getrockneten Zustand auf der Folie haften.

Zur Messung der Wärmeleitfähigkeit werden 5 Schichten der so hergestellten Folie mit Hilfe der Heizdrahtmethode (siehe z.B. O. Nielson, G. Rüschenpöhler, J. Groß, J. Fricke, High Temperatures-High Pressures, Vol. 21, 267-274 (1989) untersucht. Die gemessene Leitfähigkeit beträgt 21 mW/mK.

### Beispiele 2 bis 22

Die mit dem Gel beschichtete Folie wird nach der Trocknung aus dem Ofen genommen und vorsichtig mit einer Deckfolie aus dem gleichen Material zum Schutz vor mechanischer Zerstörung bedeckt und zur Wärmleitfähigkeitsmessung verwendet.

| Folgende Folien wurden analog zu Beispiel 1 getestet: | | | |
|---|---|---|---|
| Bsp | Folie | | Wärmleitfähigkeit mW/mK |
| 2 | Polyester (Polyethylenterephthalat) | "PET" | 14 |
| 3 | Low density Polyethylen | "LDPE" | 18 |
| 4 | Ethylen-Propylen Copolymer | "EP" | 17 |
| 5 | Poly(4-methyl-pentan) | "TPX" | 19 |
| 6 | Polytetrafluorethylen | "PTFE" | 17 |
| 7 | Poly(1-buten) | "PB" | 18 |
| 8 | Polystyrol | "PS" | 18 |
| 9 | Polyvinylacetat | "PVAC" | 15 |
| 9 | Polyvinylchlorid | "PVC" | 16 |
| 10 | Polyvinylidenchlorid | "PVDC" | 18 |
| 11 | Polyvinylfluorid | "PVF" | 14 |
| 12 | Polyvinylacrylnitril | "PAN" | 17 |
| 13 | Polymethylmethacrylat | "PMMA" | 16 |
| 14 | Polyoxymethylen | "POM" | 19 |
| 15 | Polyphenylensulfon | | 18 |
| 16 | Cellulosetriacetat | "LA" | 16 |
| 17 | Polycarbonat | "PC" | 15 |
| 18 | Polyethylennaphthalat | "PEN" | 18 |
| 19 | Polycaprolactam | | 18 |
| 20 | Polyhexamethylenadipamide | | 17 |
| 21 | Polyundecanoamid | | 16 |
| 22 | Polyimid | | 19 |

### Beispiel 23

Analog zu dem Herstellungsverfahren aus dem Beispiel 1 wird eine "high density" Polyethylen HDPE Folie verwendet und in die Halterung gelegt. Auf das Sol wird eine 1 mm dicke Schicht aus einem Glasfaservlies GH 50.502 der Firma "Glasfaser Regensburg" gelegt, das zuvor bei 600°C für 30 Minuten ausgeglüht wurde. Das Sol wird analog zu Beispiel 1 hergestellt und über das Glasfaservlies gegossen. Es bildet sich eine 1 mm hohe Solschicht auf der HDPE-Folie, in der das Vlies gleichmäßig verteilt ist. Die weitere Aufarbeitung erfolgt gemäß dem Beispiel 1. Nach der Trocknung wird die mit Aerogel beschichtete Folie mit einer 2. HDPE-Folie bedeckt. Da alle Schichten lichtdurchlässig sind, kann die Faserstruktur des eingeschlossenen Glasfaservlieses deutlich erkannt werden.
Die Wärmeleitfähigkeit der Probe beträgt 18 mW/mK.

### Beispiel 24

Analog zu Beispiel 23 wird als Unterlage eine PET-Folie verwendet. Darauf wird eine 2 mm dicke faserverstärkte Aerogelschicht hergestellt und anschließend mit einer HDPE-Folie abgedeckt. Die Wärmeleitfähigkeit der Probe beträgt 16 mW/mK.

| Analog zu dem Beispiel 23 werden folgende Folien getestet: | | | | |
|---|---|---|---|---|
| Bsp. | Folie | | Aerogelschicht [mm] | WLF mW/mK |
| 25 | Polyester (Polyethylenterephthalat) | "PET" | 2 | 15 |
| 26 | Low density Polyethylen | "LDPE" | 1 | 19 |
| 27 | Ethylen-Propylen Copolymer | "EP" | 1.5 | 17 |
| 28 | Poly(4-methyl-pentan) | "TPX" | 2 | 13 |
| 29 | Polytetrafluorethylen | "PTFE" | 2 | 15 |
| 30 | Poly(1-buten) | "PB" | 1 | 16 |
| 31 | Polystyrol | "PS" | 2 | 14 |
| 32 | Polyvinylacetat | "PVAC" | 1 | 17 |
| 33 | Polyvinylchlorid | "PVC" | 1 | 18 |
| 34 | Polyvinylidenchlorid | "PVDC" | 1.5 | 14 |
| 35 | Polyvinylfluorid | "PVF" | 1.5 | 16 |
| 36 | Polyvinylacrylnitril | "PAN" | 2 | 13 |
| 37 | Polymethylmethacrylat | "PMMA" | 2 | 13 |
| 38 | Polyoxymethylen | "POM" | 2 | 15 |
| 39 | Polyphenylensulfon | | 1 | 16 |
| 40 | Cellulosetriacetat | "LA" | 1 | 17 |
| 41 | Polycarbonat | "PC" | 1.5 | 14 |
| 42 | Polyethylennaphthalat | "PEN" | 1 | 18 |
| 43 | Polycaprolactam | | 2 | 15 |
| 44 | Polyhexamethylenadipamide | | 1 | 18 |
| 45 | Polyundecanoamid | | 1 | 18 |
| 46 | Polyimid | | 1 | 19 |

### Beispiel 47

In einem 200 ml Becherglas werden 60 ml einer wäßrigen Dispersion aus Styrol/Acrylat-Copolymerisat, Feststoffgehalt: 19 Gew.-% (34 ml Mowilith DM 760, 26 ml Wasser) vorgelegt und 125 ml hydrophobes Aerogel-Granulat mit einer Korngröße im Bereich von 50 bis 250 µm (Schüttdichte 0,08 g/cm³) mit einem Propellerrührer bei 1200 U/Min vermischt, bis eine fließfähige Suspension entsteht. Diese wird als wärmedämmender Klebstoff in 0.1 mm Schichtdicke mit einem Rakel auf eine Polyesterfolie aufgetragen. Anschließend wird ein 2 mm dickes, faserverstärktes Aerogel, das aus Wasserglas und Microlith Glasnadelmatte hergestellt wurde, aufgelegt. Als Abschluß wird erneut eine, wie für die Unterlage vorbereitete PET-Folie mit der Klebstoffseite nach unten auf die Aerogelschicht aufgelegt. Das so präparierte Laminat wird in einem Ofen bei 70°C für 24 Stunden nachbehandelt. Die anschließend bestimmte Wärmeleitfähigkeit des Laminats beträgt 24 mW/mK.

| Analog zu Beispiel 47 werden folgende Folien getestet: | | | | |
|---|---|---|---|---|
| Bsp. | Folie | | Aerogelschicht [mm] | WLF mW/mK |
| 48 | Polyester (Polyethylenterephthalat) | "PET" | 2 | 14 |
| 49 | Low density Polyethylen | "LDPE" | 3 | 13 |
| 50 | Ethylen-Propylen Copolymer | "EP" | 4 | 14 |
| 51 | Poly(4-methyl-pentan) | "TPX" | 3 | 16 |
| 52 | Polytetrafluorethylen | "PTFE" | 2 | 18 |
| 53 | Poly(1-buten) | "PB" | 2 | 16 |
| 54 | Polystyrol | "PS" | 3 | 14 |
| 55 | Polyvinylacetat | "PVAC" | 1 | 19 |
| 56 | Polyvinylchlorid | "PVC" | 1 | 20 |
| 57 | Polyvinylidenchlorid | "PVDC" | 0.5 | 21 |
| 58 | Polyvinylfluorid | "PVF" | 2 | 20 |
| 59 | Polyvinylacrylnitril | "PAN" | 3 | 16 |
| 60 | Polymethylmethacrylat | "PMMA" | 1 | 19 |
| 61 | Polyoxymethylen | "POM" | 2 | 15 |
| 62 | Polyphenylensulfon | | 2 | 17 |
| 63 | Cellulosetriacetat | "LA" | 2 | 18 |
| 64 | Polycarbonat | "PC" | 1.5 | 14 |
| 65 | Polyethylennaphthalat | "PEN" | 1 | 19 |
| 66 | Polycaprolactam | | 1 | 20 |
| 67 | Polyhexamethylenadipamide | | 2 | 15 |
| 68 | Polyundecanoamid | | 1 | 17 |
| 69 | Polyimid | | 4 | 13 |

## Patentansprüche

1. Folie, **dadurch gekennzeichnet, daß** sie auf mindestens einer Seite mit einer Aerogelschicht beschichtet ist und daß die Aerogele hydrophobe Oberflächengruppen aufweisen.

2. Folie gemäß Anspruch 1, **dadurch gekennzeichnet, daß** in der Aerogelschicht SiO₂- Aerogele verwendet werden.

3. Folie gemäß mindestens einem der vorhergehenden Ansprüche **dadurch gekennzeichnet, daß** die Aerogele der Aerogelschicht Porositäten über 60 % und Dichten unter 0,6 g/cm³ aufweisen.

4. Folie gemäß mindestens einem der vorhergehenden Ansprüche, **dadurch gekennzeichnet, daß** die Aerogele Wärmeleitfähigkeiten von weniger als 40 mW/mK aufweisen.

5. Folie gemäß mindestens einem der vorhergehenden Ansprüche, **dadurch gekennzeichnet, daß** die Aerogelschicht IR-Trübungsmittel enthält.

6. Folie gemäß mindestens einem der vorhergehenden Ansprüche, **dadurch gekennzeichnet, daß** die Aerogelschicht Fasern enthält.

7. Folie gemäß mindestens einem der vorhergehenden Ansprüche, **dadurch gekennzeichnet, daß** als Folienmaterial Polyester, Cellulose und CelluloseDerivate, Polyolefine, Polystyrole, Polymethyl(meth)acrylate, Polyvinylchlorid, Polyamide oder Polycarbonate verwendet werden.

8. Folie gemäß Anspruch 7, **dadurch gekennzeichnet, daß** als Folienmaterial Polyethylenterephthalat oder Polypropylen verwendet wird.

9. Verfahren zur Herstellung einer beschichteten Folie gemäß mindestens einem der Ansprüche 1 bis 8, **dadurch gekennzeichnet, daß** man auf eine Folie ein Sol aufbringt und durch Kondensation und Trocknung zu einem Aerogel umsetzt.

10. Verfahren zur Herstellung einer beschichteten Folie gemäß mindestens einem der Ansprüche 1 bis 8, **dadurch gekennzeichnet, daß** man ein Aerogel herstellt und auf einer Folie verklebt.

11. Folie, **dadurch gekennzeichnet, daß** zwischen zwei Folienschichten eine Schicht angeordnet ist, die Aerogelpulver und/oder -granulat enthält und daß die Aerogele hydrophobe Oberflächengruppen aufweisen.

12. Folie gemäß Anspruch 11, **dadurch gekennzeichnet, daß** in der Aerogelschicht SiO₂- Aerogele verwendet werden.

13. Folie gemäß Anspruch 11 oder 12, **dadurch gekennzeichnet, daß** die Aerogele der Aerogelschicht Porositäten über 60 % und Dichten unter 0,6 g/cm³ aufweisen.

14. Folie gemäß mindestens einem der Ansprüche 11 bis 13, **dadurch gekennzeichnet, daß** die Aerogele Wärmeleitfähigkeiten von weniger als 40 mW/mK aufweisen.

15. Folie gemäß mindestens einem der Ansprüche 11 bis 14, **dadurch gekennzeichnet, daß** die Aerogelschicht IR-Trübungsmittel enthält.

16. Folie gemäß mindestens einem der Ansprüche 11 bis 15, **dadurch gekennzeichnet, daß** die Aerogelschicht Fasern enthält.

17. Folie gemäß mindestens einem der Ansprüche 11 bis 16, **dadurch gekennzeichnet, daß** als Folienmaterial Polyester, Cellulose und CelluloseDerivate, Polyolefine, Polystyrole, Polymethyl(meth)acrylate, Polyvinylchlorid, Polyamide oder Polycarbonate verwendet werden.

18. Folie gemäß Anspruch 17, **dadurch gekennzeichnet, daß** als Folienmaterial Polyethylenterephthalat oder Polypropylen verwendet wird.

19. Verfahren zur Herstellung einer beschichteten Folie gemäß mindestens einem der Ansprüche 11 bis 18, **dadurch gekennzeichnet, daß** man Aerogelpulver oder -granulat auf eine Folie aufbringt, eine zweite Folie auflegt und mit der ersten Folie so verschmilzt oder verklebt, daß Bereiche des Aerogels eingeschlossen werden.

20. Verwendung einer Folie gemäß mindestens einem der Ansprüche 1 bis 8 sowie 11 bis 18 als Wärmedämmaterial.

## Claims

1. Sheet, **characterised in that** it is coated on at least one side with an aerogel layer and **in that** the aerogels exhibit hydrophobic surface groups.

2. Sheet according to claim 1, **characterised in that** SiO₂ aerogels are used in the aerogel layer.

3. Sheet according to at least one of the preceding claims, **characterised in that** the aerogels of the aerogel layer exhibit porosities of over 60% and densities of less than 0.6 g/cm³.

4. Sheet according to at least one of the preceding claims, **characterised in that** the aerogels exhibit thermal conductivities of less than 40 mW/mK.

5. Sheet according to at least one of the preceding claims, **characterised in that** the aerogel layer contains IR opacifier.

6. Sheet according to at least one of the preceding claims, **characterised in that** the aerogel layer contains fibres.

7. Sheet according to at least one of the preceding claims, **characterised in that** polyester, cellulose and cellulose derivatives, polyolefins, polystyrols, polymethyl (meth) acrylates, polyvinyl chloride, polyamides or polycarbonates are used as the sheet material.

8. Sheet according to claim 7, **characterised in that** polyethylene terephthalate or polypropylene is used as the sheet material.

9. Method of manufacturing a coated sheet according to at least one of chims 1 to 8, **characterised in that** a sol is applied to a sheet and is converted to an aerogel by condensation and drying.

10. Method of manufactunng a coated sheet according to at least one of claims 1 to 8, **characterised in that** an aerogel is manufactured and adhered to a sheet.

11. Sheet, **characterised in that** a layer is arranged between two sheet layers containing aerogel powder and/or granulate, and **in that** the aerogels exhibit hydrophobic surface groups.

12. Sheet according to claim 11, **characterised in that** SiO₂ aerogels are used in the aerogel layer.

13. Sheet according to claim 11 or 12, **characterised in that** the aerogels of the aerogel layer exhibit porosities of over 60% and densities of less than 0.6 g/cm³.

14. Sheet according to at least one of claims 11 to 13, **characterised in that** the aerogels exhibit thermal conductivities of less than 40 mW/mK.

15. Sheet according to at least one of claims 11 to 14, **characterised in that** the aerogel layer contains IR opacifiers.

16. Sheet according to at least one of claims 11 to 15, **characterised in that** the aerogel layer contains fibres.

17. Sheet according to at least one of claims 11 to 16, **characterised in that** polyester, cellulose and cellulose derivatives, polyolefins, polystyrols, polymethyl (meth) acrylates, polyvinyl chloride, polyamides or polycarbonates are used as the sheet material.

18. Sheet according to claim 17, **characterised in that** polyethylene terephthalate or polypropylene is used as the sheet material.

19. Method of manufacturing a coated sheet according to at least one of claims 11 to 18, **characterised in that** aerogel powder or granulate is applied to a sheet, a second sheet is placed on it and is melted with or adhered to the first sheet so that areas of the aerogel are enclosed.

20. Use of a sheet according to at least one of claims 1 to 8 and 11 to 18 as a heat insulating material.

## Revendications

1. Feuille, **caractérisée en ce qu'**elle est revêtue sur au moins une face avec une couche d'aérogel et que les aérogels présentent des groupes de surface hydrophobes.

2. Feuille selon la revendication 1, **caractérisée en ce qu'**on utilise des aérogels de SiO₂ dans la couche d'aérogel.

3. Feuille selon au moins une des revendications précédentes **caractérisée en ce que** les aérogels de la couche d'aérogel présentent des porosités supérieures à 60 % et une masse volumique inférieure à 0,6 g/cm³.

4. Feuille selon au moins une des revendications précédentes **caractérisée en ce que** les aérogels présentent des conductivités thermiques de moins de 40 mW/mK.

5. Feuille selon au moins une des revendications précédentes **caractérisée en ce que** la couche d'aérogel contient un agent opacifiant aux IR.

6. Feuille selon au moins une des revendications précédentes **caractérisée en ce que** la couche d'aérogel contient des fibres.

7. Feuille selon au moins une des revendications précédentes **caractérisée en ce qu'**on utilise comme matériau de feuilles le polyester, la cellulose et les dérivés de la cellulose, les polyoléfines, les polystyrènes, les poly(méth)acrylates de méthyle, le polychlorure de vinyle, les polyamides ou les polycarbonates.

8. Feuille selon la revendication 7, **caractérisée en ce qu'**on utilise comme matériau de feuilles le polytéréphtalate d'éthylène ou le polypropylène.

9. Procédé pour la fabrication d'une feuille revêtue selon au moins une des revendications 1 à 8, **caractérisé en ce qu'**on dépose un sol sur une feuille et on le transforme par séchage en un aérogel.

10. Procédé pour la préparation d'une feuille revêtue selon au moins une des revendications 1 à 8, **caractérisé en ce qu'**on prépare un aérogel et on le colle sur une feuille.

11. Feuille, **caractérisée en ce qu'**entre deux couches de feuilles est disposée une couche qui contient une poudre et/ou un granulé d'aérogel et **en ce que** les aérogels présentent des groupes de surface hydrophobes.

12. Feuille selon la revendication 11, **caractérisée en ce qu'**on utilise des aérogels de SiO₂ dans la couche d'aérogel.

13. Feuille selon la revendication 11 ou 12, **caractérisée en ce que** les aérogels de la couche d'aérogel présentent des porosités supérieures à 60 % et des masses volumiques inférieures à 0,6 g/cm³.

14. Feuille selon au moins une des revendications 11 à 13, **caractérisée en ce que** les aérogels présentent des conductivités thermiques inférieures à 40 mW/mK.

15. Feuille selon au moins une des revendications 11 à 14, **caractérisée en ce que** la couche d'aérogel contient un agent opacifiant aux IR.

16. Feuille selon au moins une des revendications 11 à 15, **caractérisée en ce que** la couche d'aérogel contient des fibres.

17. Feuille selon au moins une des revendications 11 à 16, **caractérisée en ce qu'**on utilise comme matériau de feuilles le polyester, la cellulose et les dérivés de la cellulose, les polyoléfines, les polystyrènes, les poly(méth)acrylates de méthyle, le polychlorure de vinyle, les polyamides ou les polycarbonates.

18. Feuille selon la revendication 17, **caractérisée en ce qu'**on utilise comme matériau de feuilles le polytéréphtalate d'éthylène ou le polypropylène.

19. Procédé pour la fabrication d'une feuille revêtue selon au moins une des revendications 11 à 18, **caractérisé en ce qu'**on dépose une poudre ou un granulé de sol sur une feuille, on dépose une deuxième feuille et on la fond ou on la colle avec la première feuille, de manière à enrober des zones de l'aérogel.

20. Utilisation d'une feuille selon au moins une des revendications 1 à 8 ainsi que 11 à 18 comme matériau d'isolation thermique.
